# EUROPEAN PATENT SPECIFICATION

(11) **EP 3 647 922 B1**
(45) Date of publication and mention of the grant of the patent: **28.10.2026**
(21) Application number: 19210083.2
(22) Date of filing: 25.09.2015
(51) Int. Cl.: G06F 3/044, G06F 3/0346, G06F 3/0482, G06F 3/0488, G06F 3/0354, G06F 3/0484

(54) **USER TERMINAL DEVICE AND METHOD FOR CONTROLLING THE USER TERMINAL DEVICE THEREOF**
BENUTZERENDGERÄTEVORRICHTUNG UND VERFAHREN ZUR STEUERUNG DER BENUTZERENDGERÄTEVORRICHTUNG
DISPOSITIF DE TERMINAL D'UTILISATEUR ET PROCÉDÉ DE COMMANDE DE SON TERMINAL D'UTILISATEUR

(30) Priority: 29.09.2014 KR 20140130519
(43) Date of publication of application: 06.05.2020
(62) Document number(s) of the earlier application(s) in accordance with Art. 76 EPC: 15846561.7 / 3 201 747
(73) Proprietor: Samsung Electronics Co., Ltd., Gyeonggi-do 16677 (KR)
(72) Inventor: Park, Mi-ra, 06129 Seoul (KR); Kuk, Sung-bin, 16546 Suwon-si, Gyeonggi-do (KR); Kim, Hark-joon, 15296 Ansan-si, Gyeonggi-do (KR); Lee, Sang-il, 13607 Seongnam-si, Gyeonggi-do (KR); Jung, Min-kyu, 08735 Seoul (KR); Kang, Seong-hoon, 16522 Suwon-si, Gyeonggi-do (KR)
(74) Representative: Gulde & Partner

(56) References cited:
- EP-A2- 2 105 844
- WO-A2-2014/106719
- US-A1- 2011 227 871
- US-A1- 2014 210 748
- US-A1- 2015 338 946

## Description

### [Technical Field]

The present disclosure relates to a methods and apparatuses consistent with the various embodiments to a user terminal device and a control method thereof. More particularly, the present disclosure relates to a user terminal device that is controlled by a polyhedron-shaped input device, and a control method thereof.

### [Background Art]

These days, various functions are being provided by various user terminal devices (for example, smart phones, tablet personal computers (PCs), notebooks, and PCs and the like). For example, the latest user terminal devices not only perform call functions but also other various functions such as internet search functions, contents creation and editing functions, schedule managing functions, and health managing functions and the like.

Conventional user terminal devices are known from WO 2014/106719 A2, US 2011/227871 A1, US 2014/210748 A1 and EP 2 105 844 A2.

However, these various user terminal devices increased the steps for entering menus using user touch in order to perform such various functions, causing inconvenience to users according to the related art.

Furthermore, in these types of various user terminal devices, to execute a new operation, a user has to use the certain screen area, also causing inconvenience of having to make multiple manipulations according to the related art.

The above information is presented as background information only to assist with an understanding of the present disclosure. No determination has been made, and no assertion is made, as to whether any of the above might be applicable as prior art with regard to the present disclosure.

### [Disclosure]

### [Technical Solution]

Aspects of the present disclosure are to address at least the above-mentioned problems and/or disadvantages and to provide at least the advantages described below. The invention is defined by the independent claims. Preferred embodiments are disclosed in the dependent claims.

### [Advantageous Effects]

According to the aforementioned various embodiments of the present disclosure, the user terminal device may not only perform various manipulations through the polyhedral shaped input device but may also provide a new interaction where various fun elements have been added. Furthermore, since the polyhedral input device does not need any additional power, it is possible to perform various functions using the input device where a battery is unnecessary.

Other aspects, advantages, and salient features of the disclosure will become apparent to those skilled in the art from the following detailed description, which, taken in conjunction with the annexed drawings, discloses various embodiments of the present disclosure.

### [Description of Drawings]

The above and other aspects, features, and advantages of certain embodiments of the present disclosure will be more apparent from the following description taken in conjunction with the accompanying drawings, in which:
FIG. 1 is a view illustrating a user terminal device and an input device according to an embodiment of the present disclosure;
FIG. 2 is a block diagram schematically illustrating a configuration of a user terminal device according to an embodiment of the present disclosure;
FIG. 3 is a block diagram illustrating in detail a configuration of a user terminal device according to an embodiment of the present disclosure;
FIGS. 4A, 4B, 4C and 4D are views for explaining an hexahedral input device according to an embodiment of the present disclosure;
FIGS. 5A to 15B are views for explaining various embodiments of controlling a user terminal device using a hexahedral input device according to various embodiment of the present disclosure;
   and
FIG. 16 is a flowchart for explaining a method for controlling a user terminal device according to an embodiment of the present disclosure.

Throughout the drawings, like reference numerals will be understood to refer to like parts, components, and structures.

### [Best Mode]

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

In the following description, like drawing reference numerals are used for the like elements, even in different drawings. The matters defined in the description, such as detailed construction and elements, are provided to assist in a comprehensive understanding of various embodiments of the present disclosure. However, various embodiments of the present disclosure can be practiced without those specifically defined matters. Also, well-known functions or constructions are not described in detail since they would obscure the application with unnecessary detail.

Terms such as 'first' and 'second' may be used to describe various components, but they should not limit the various components. Those terms are only used for the purpose of differentiating a component from other components. Furthermore, 'and/or' may include any one of or a combination of the components mentioned. Furthermore, "include/comprise" or "including/comprising" used in the specification represents that one or more components, operations, and elements exist or are added.

In the embodiments of the present disclosure, a 'module' or 'unit' performs at least one function or operation, and may be realized as hardware or software, or a combination thereof.

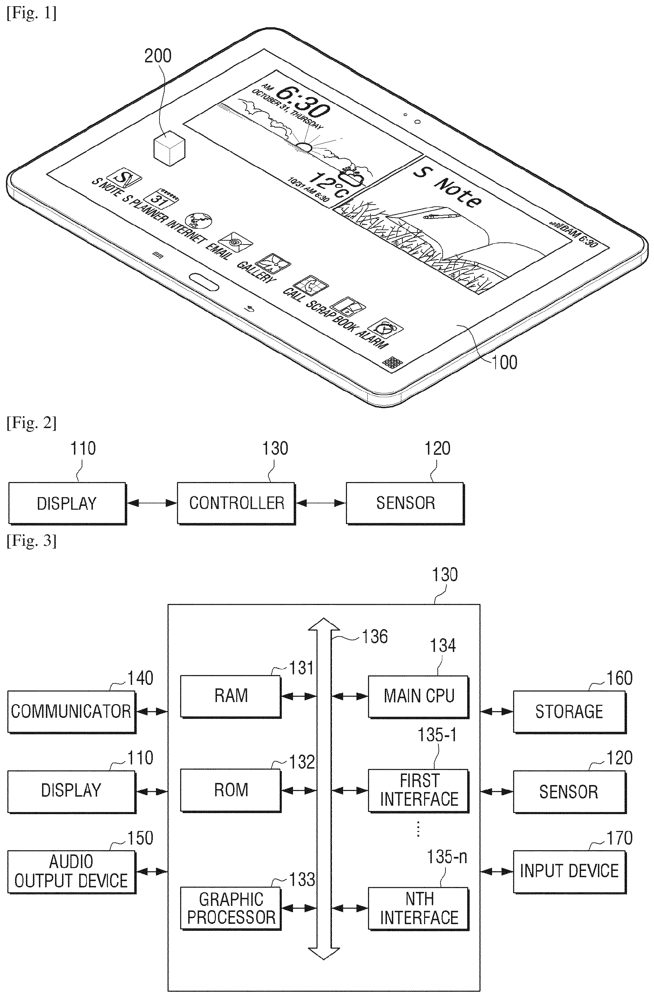

Hereinafter, various embodiments of the present disclosure will be explained with reference to the drawings attached. FIG. 1 is a view illustrating a user terminal device 100 and an input device 200 according to an embodiment of the present disclosure. Herein, the user terminal device 100 may be a tablet personal computer (PC) as illustrated in FIG. 1, but without limitation, and thus the user terminal device 100 may be another type of user terminal device (for example, smart phone, notebook PC, smart TV, desktop PC, and kiosk and the like). The input device 200 may have a polyhedral shape with a plurality of surfaces. For example, as illustrated in FIG. 1, the input device 200 may have a regular hexahedral shape, but without limitation, and thus the input device 200 may have any one of various polyhedral shapes such as regular hexahedron, and regular octahedron and the like. Especially, the input device 200 may include different touch patterns in each of the plurality of surfaces.

In a case where one of the plurality of surfaces of the input device 200 touches the user terminal device 100, the user terminal device 100 may control a function of the user terminal device 100 according to a touch pattern on the touched surface. Various functions that may be performed according to user interactions of the user terminal device 100 using the input device 200 will be explained in further detail later on.

FIG. 2 is a block diagram schematically illustrating a configuration of the user terminal device 100 according to an embodiment of the present disclosure.

Referring to FIG. 2, the user terminal device 100 includes a display 110, sensor 120, and controller 130.

The display 110 displays an image content received from outside. Especially, when the input device 200 having the polyhedral shape is touched on the display 110, the display 110 may display a user interface (UI) near the area touched by the input device 200.

The sensor 120 senses a user interaction on the display 110. More specifically, the sensor 120 may sense a user interaction of a touch being made on the display 110 by the input device 200 having the polyhedral shape. Herein, the sensor 120 may sense different types of touch patterns formed on each of the plurality of surfaces included in the input device 200.

The controller 130 may control the overall operations of the user terminal device 100. Especially, when a user interaction of the input device 200 touching the display 110 is sensed through the sensor 120, the controller 130 may control the functions of the user terminal device according to the touch pattern on the touched surface among the plurality of surfaces. Herein, each of the plurality of surfaces of the input device 200 may have a corresponding function and include a shape representing the corresponding function.

More specifically, when a user interaction is sensed of the display 110 being touched by the input device 200 through the sensor 120, the controller 130 may sense a touch pattern on the touched surface of the input device, and determine the touched surface based on the sensed touch pattern, and perform a function corresponding to the determined touched surface.

In an embodiment of the present disclosure, when a user interaction of a touch by the input device 200 is sensed, the controller 130 may control the display 110 to display on an area surrounding the touched area by the input device 200 a UI that includes a plurality of menus to control the user terminal device according to the touch pattern of the touched surface of the plurality of surfaces. For example, when a user interaction of a first surface of the input device 200 touching the display 110 is sensed, the controller 130 may determine the first surface touched based on the touch pattern of the first surface and control the display 110 to display a UI that includes various menus such as a home menu, edit menu, and search menu and the like such that it corresponds to the first surface.

Furthermore, when an interaction is sensed of the input device 200 being dragged to one of the plurality of menus with the input device 200 still touching the display, the controller 130 may perform a function that corresponds to the menu to which the input device 200 has been dragged. For example, when an interaction is sensed of the input device 200 being dragged to the search menu of the plurality of menus with the input device 200 still touching the display, the controller 130 may control the display 110 to display a search window to perform the search function.

Furthermore, when an interaction is sensed of the display being touched by ta first surface of the plurality of surfaces of the input device 200 and then being dragged to a second point, the controller 130 may control the display 110 to create a new screen on an area where the interaction was input. Herein, the controller 130 may generate a new type of screen according to the touch pattern of the first surface that touched the display.

Furthermore, when an interaction is sensed of the input device 200 being turned around such that the surface touching the display is changed from the first surface to the second surface, the controller 130 may perform a function corresponding to the interaction. For example, the controller 130 may perform a function of moving an item according to the interaction of the input device 200 being turned over.

Furthermore, after an interaction is sensed of the input device 200 being turned around such that the surface touching the display is changed from the first surface to the second surface with at least one item being displayed on the display 110 and then a tap interaction of a first item of the at least one item being tapped by the second surface of the input device tapping, the controller 130 may store data corresponding to the first item where the tap interaction was sensed.

Furthermore, when an interaction is sensed of the input device 200 being rotated with the first surface of the input device 200 still touching the first item of the at least one item being displayed, the controller may perform a function corresponding to the first surface on the first item. For example, when an interaction is sensed of the input device 200 being rotated with the first surface of the input device 200 still touching the first item, the controller 130 may perform a locking function on the first item.

According to the aforementioned various embodiments of the present disclosure, the user terminal device 100 may not only perform various manipulations through an input device having a polyhedral shape but also provide a new interaction with various fun elements added thereto.

Hereinafter, the present disclosure will be explained in further detail with reference to FIGS. 3 to 15B.

FIG. 3 is a block diagram illustrating in detail a configuration of the user terminal device 100 according to an embodiment of the present disclosure. The user terminal device 100 includes a communicator 140, display 110, audio output device 150, storage 160, sensor 120, input device 170 and controller 130.

Referring to FIG. 3, a comprehensive illustration of various components of a user terminal device that includes various functions such as a communication function and display function for example. Therefore, in an embodiment, some of the illustrated components may be changed or other components may be further added.

The communicator 140 is a configuration for performing various types of external devices or external servers according to various types of communication methods. The communicator 140 may include various communication chips such as a WiFi chip, Bluetooth chip, NFC chip, and wireless communication chip and the like. Herein, each of the WiFi chip, Bluetooth chip, and near field communication (NFC) chip performs communication in the WiFi method, Bluetooth method, and NFC method, respectively. Of these chips, the NFC chip is a chip that operates in an NFC method that uses the 13.56MHz bandwidth, among numerous RF-ID frequency bandwidths of 135kHz, 13.56MHz, 433MHz, 860-960MHz, and 2.45GHz. When using a WiFi chip or Bluetooth chip, it is possible to transceive various information on connection such as information on an SSID and session key first, make a communication connection using those information to transceive various information. A wireless communication chip refers to a chip that performs communication according to various communication standards such as IEEE, zigbee, 3rd Generation, 3rd generation partnership project (3GPP), and long term evolution (LTE).

Especially, when a user interaction is sensed in which the input device 200 including a different touch pattern in each of the plurality of surfaces has touched the display, the communicator 140 may establish a communication connection with another user terminal device 100 that sensed the same touch pattern as the touch pattern on the touched surface of the input device.

The display 110 displays at least one of a video frame consisting of image data received from an image receiver (not illustrated) processed by an image processor (not illustrated) and various screens generated in a graphic processor 133. Especially, the display 110 may display on the area surrounding the touched area a UI that includes at least one menu that may control the user terminal device 100.

The audio output device 150 is a component for outputting various audio data processed in the audio processor (not illustrated), various alarm sounds, and voice messages.

The storage 160 stores various modules for driving the user terminal device 100. For example, a software including a base module, sensing module, communication module, presentation module, web browser module, and service module may be stored in the storage 160. Herein, the base module is a basic module that processes a signal transmitted from each hardware included in the user terminal device 100 and transmits the processed signal to an upper layer module. A sensing module is a module that collects information from various sensors, and that analyzes and manages the collected information. Examples of sensing modules include a face recognition module, voice recognition module, motion recognition module, and NFC recognition module. The presentation module is a module used to configure a display screen. Examples of presentation modules include a multimedia module for reproducing and outputting multimedia contents, and UI rendering module for processing a UI and graphics. The communication module is a module used for communicating with an external device. The web browser module is a module for web browsing and accessing a web server. The service module is a module that includes various applications for providing various services.

Especially, the storage 160 may store information on the touch patterns included in each of the plurality of surfaces of the input device 200, and also information on the functions and UI corresponding to each of the plurality of surfaces.

The sensor 120 senses a user interaction on the display 110. Especially, the sensor 120 may sense various user interactions such as a touch interaction, drag interaction, rotation interaction, turn over interaction and the like made on the display 110. Meanwhile, the sensor 120 may be configured as a touch screen just as the display 110, or one of various types of sensing devices such as a proximity sensor, camera and the like.

The input device 170 receives user commands for controlling overall operations of the user terminal device 100. Especially, the input 170 may be configured as a button and the like, but without limitation, and thus the input device 170 may be configured as another type of input device such as a remote control, pointing device and the like that may control the user terminal device 100.

The controller 130 controls the overall operation of the terminal device 100 using various programs stored in the storage 160.

As illustrated in FIG. 3, the controller 130 includes a RAM 131, ROM 132, graphic processor 133, main CPU 134, 1st to nth interfaces 135-1 to 135-n, and bus 136. Herein, the RAM 131, ROM 132, graphic processor 133, main CPU 134, and 1st to nth interfaces 135-1 to 135-n may be connected to one another via buses 136.

The ROM 132 stores sets of commands for system booting. When a turn on command is input and power is supplied, the main CPU 134 copies an O/S stored in the storage 160 to the RAM 131 according to the command stored in the ROM 132, and executes the O/S to boot the system. When the booting is completed, the main CPU 134 copies various application programs stored in the storage 160 to the RAM 131, and executes the application programs copied to the RAM 131 to execute various operations.

The graphic processor 133 generates a screen that includes various objects such as icons, images and texts using an operator (not illustrated) and renderer (not illustrated). The operator computes attribute values such as coordinates, shapes, sizes, and colors and the like of each object to be displayed according to layouts of the screen using control commands received from the sensor 120 or input device 170.

The renderer generates screens of various layouts that include objects based on attribute values computed in the operator. The screen generated in the renderer is displayed within the display area of the display 110.

The main CPU 134 accesses the storage 160, and performs booting using the O/S stored in the storage 160. Furthermore, the main CPU 134 performs various operations using various programs, contents, and data and the like stored in the storage 160.

The 1st to nth interfaces 135-1 to 135-n are connected to the aforementioned various components. One of the interfaces may be a network interface connected to an external device via a network.

Especially, when a user interaction of the display 110 being touched by the input device 200 having a polyhedral shape is sensed through the sensor 120, the controller 130 may control the functions of the user terminal device 100 according to a touch pattern on the touched surface among the plurality of surfaces of the input device.

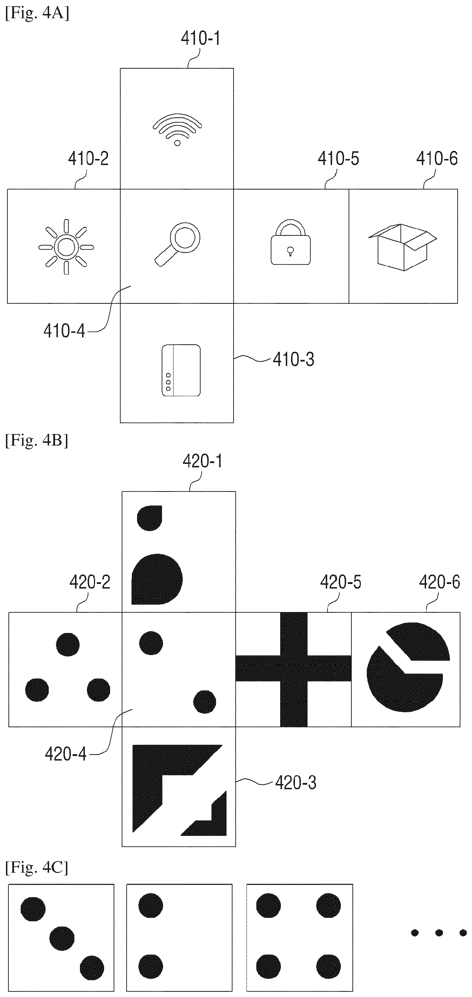

According to an embodiment of the present disclosure, the input device 200 having a polyhedral shape may be one having a regular hexahedral shape. Each of the plurality of surfaces of the input device 200 has its corresponding functions of the user terminal device 100, and each of the plurality of surfaces of the input device 200 may include a shape representing its functions of the user terminal device 100. For example, as illustrated in FIG. 4A, a first surface of the input device 200 includes a shape representing a wireless communicating function 410-1, a second surface of the input device 200 includes a shape representing a brightness adjustment function 410-2, a third surface of the input device 200 includes a shape representing a schedule management function 410-3, and a fourth surface of the input device 200 includes a shape representing a search function 410-4, a fifth surface of the input device 200 includes a shape representing a lock function 410-5, and a sixth surface of the input device 200 may include a shape representing a data storing function 410-6. Meanwhile, besides the aforementioned, there may be other kinds of various functions (for example deleting function and magnet function and the like) that may correspond to each of the plurality of surfaces of the input device 200.

Furthermore, each of the plurality of surfaces of the input device 200 includes an electrode with different touch patterns.

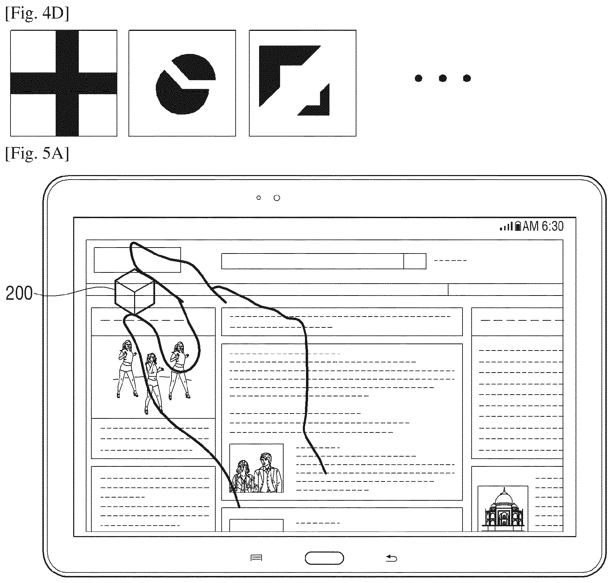

Specifically, as illustrated in FIG. 4B, the plurality of surfaces of the input device 200 include electrodes 420-1 to 420-6 of different counts and shapes. Herein, the locations and counts of the electrodes may be different from one another as illustrated in FIG. 4C, and the shapes of the electrodes may be different from one another as illustrated in FIG. 4D.

Meanwhile, according to an embodiment of the present disclosure, a touch pattern formed on one surface and a shape representing its function may correspond to each other. That is, a touch pattern 420-1 of the first surface may correspond to a shape of the first surface 410-1, a touch pattern 420-3 of the third surface may correspond to a shape of the third surface 410-2, a touch pattern 420-4 of the fourth surface 410-4 may correspond to a shape of the fourth surface 410-4, a touch pattern 420-5 of the fifth surface may correspond to the fifth surface 410-5, and a touch pattern 420-6 of the sixth surface may correspond to a shape 410-6 of the sixth surface.

However, this is a mere embodiment of the present disclosure, and thus a touch pattern of a surface may correspond to a shape of the surface on the opposite side so that the function that the user intends to execute can be seen. More specifically, in a case where the user performs a touch interaction using the input device 200, not the touched surface but the opposite surface may be shown to the user. Therefore, a touch pattern may correspond to the shape on the opposite side so that the user may see the function of the touched surface more intuitively. Therefore, a touch pattern 420-1 of the first surface may correspond to a shape 410-3 of the third surface, a touch pattern 420-2 of the second surface may correspond to a shape of the fifth surface 410-5, a touch pattern of the third surface may correspond to a shape 410-1 of the first surface, a touch pattern 420-4 of the fourth surface may correspond to the shape of the sixth surface 410-6, a touch pattern 420-5 of the fifth surface may correspond to the shape of the second surface 410-2, and a touch pattern of the sixth surface may correspond to a shape of the fourth surface 410-4. In such a case, the shape included in the opposite surface of the touched surface is shown to the user, thereby enabling the user to see the functions corresponding to the touched surface more easily.

In the aforementioned embodiments of the present disclosure, it was explained that the input device 200 includes an electrode of a predetermined touch pattern, and that the sensor 120 is a capacitive touch panel, but this is not limitation thereto, and thus the sensor 120 may be a decompression type touch panel, wherein the input device 200 may be provided with a touch pattern on each of the plurality of surfaces so that pressure can be applied to the predetermined touch pattern.

Referring to FIGS. 5A to 15B, explanation will be made on various functions that may be performed according to a sensed user interaction using the input device 200.

When an interaction of a first surface among the plurality of surfaces of the input device 200 touching a first point on the display 110 and dragging the touch to a second point is sensed, the controller 130 may control the display 110 to generate a new screen on the area where the interaction was sensed.

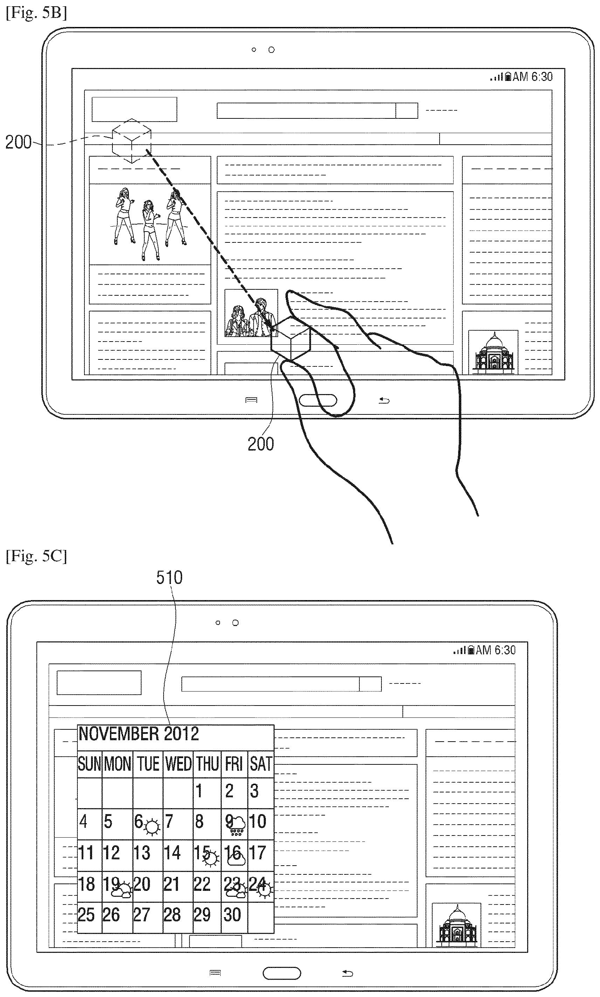

Referring to FIG. 5A, when an interaction is sensed in which the first point of the display 110 is touched by the first surface of the input device 200 and then dragged to the second point of the display 110 as illustrated in FIG. 5B, the controller 130 may, as illustrated in FIG. 5C, control the display 110 to display a new window. Herein, the new window may have a shape of a square where the first point and second point face each other as illustrated in FIG. 5C.

Especially, the controller 130 may control the display 110 to generate a new screen 510 of a different type according to the touch pattern of the touched first surface. For example, when the first surface is a surface that corresponds to the schedule managing function, the controller 130 may, as illustrated in FIG. 5C, control the display 110 to display a screen on the new screen for schedule managing. In a case where the first surface corresponds to the search function, the controller 130 may control the display 110 to display a screen for search on a new screen.

Furthermore, when an interaction of the display 110 being touched by the input device 200 is sensed, the controller 130 may control the display 110 to display a UI that includes a plurality of menus for controlling the user terminal device 100 to display a UI including a plurality of menus near the touched area of the display 110 according to the touch pattern of the touched surface of the plurality of surfaces of the input device. Furthermore, when a user interaction of the input device being dragged to one of the plurality of menus with the input device still touching the display is sensed, the controller 130 may perform a function corresponding to the menu to which the input device was dragged.

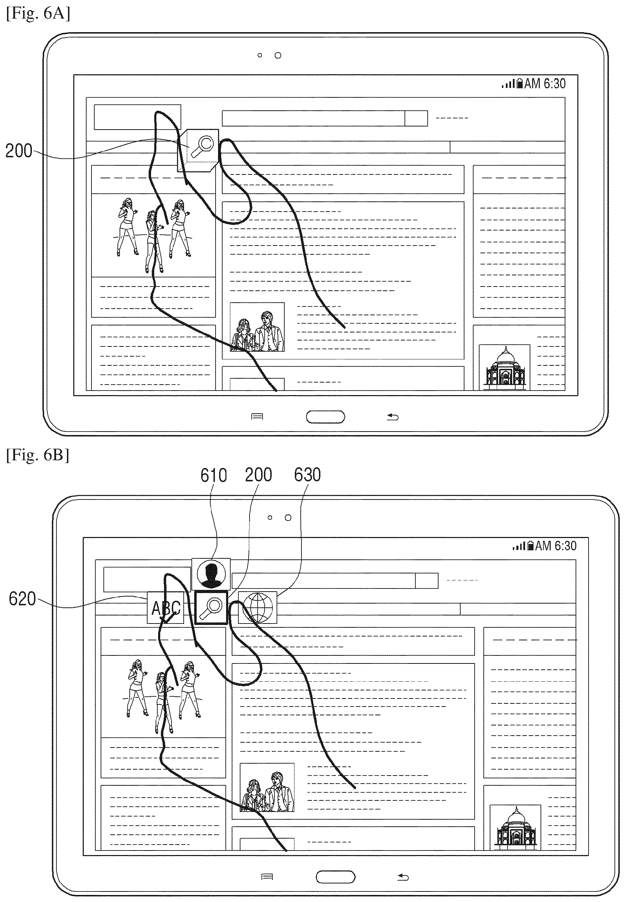

Referring to FIG. 6A, when a user interaction of the display 110 being touched by a first surface of the input device 200 is sensed, the controller 130, as illustrated in FIG. 6B, may control the display 110 to display a UI including a plurality of menus 610 to 630 capable of performing a function corresponding to the first surface near the touched area on the display 110. For example, when a user interaction of the display being touched by surface corresponding to the search function is sensed, the controller may as illustrated in FIG. 6B, control the display 110 to display a human search menu 610, dictionary menu 620 for searching word information, and internet search menu 630 capable of searching related information from the internet on the surrounding area of the touched surface on the display.

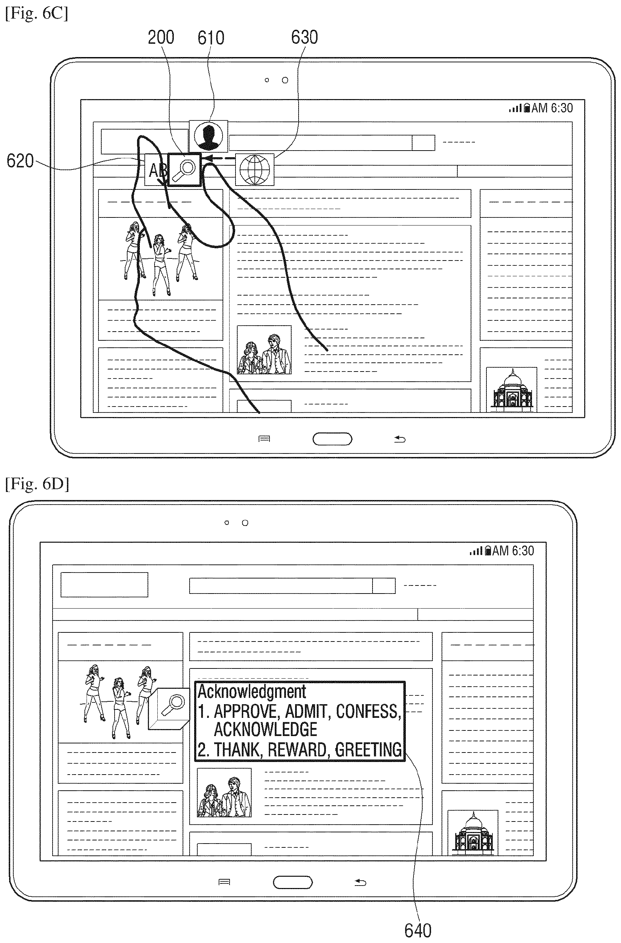

Referring to FIG. 6C, when a user interaction of the input device 200 being dragged to the dictionary menu 620 of the plurality of menus with the input device still touching the display is sensed, the controller 130 may perform a function corresponding to the dictionary menu 620. More specifically, when a user command to select a certain word while the function of searching word information corresponding to the dictionary menu 620 is being activated, the controller may, as illustrated in FIG. 6D, control the display 110 to display the dictionary information 640 on the certain word selected.

When a user interaction is sensed of the input device being rotated while still maintaining a touch by the first surface of the input device on a first item among at least one items displayed on the display 110, the controller 130 may perform the function corresponding to the first surface regarding the first item.

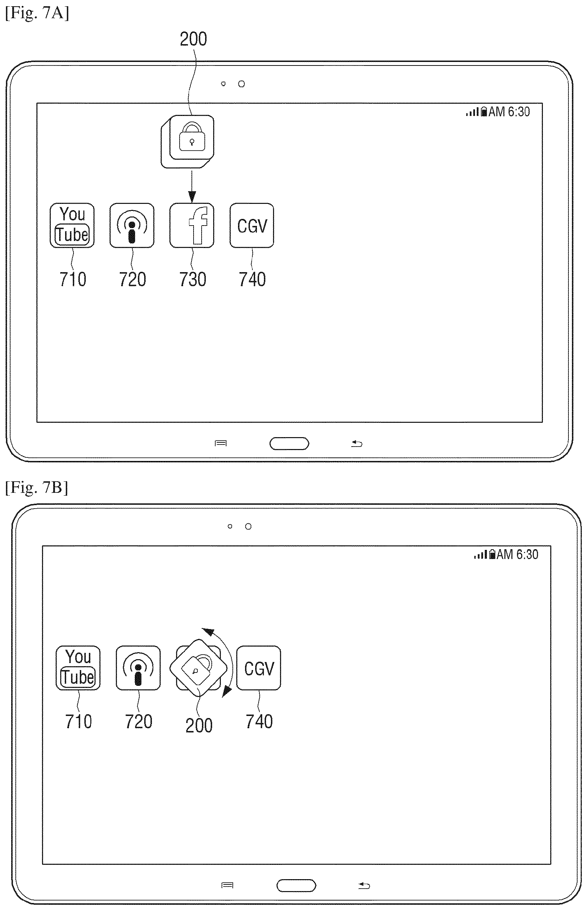

Referring to FIG. 7A, when a user interaction is sensed of the third item 720 on the display being touched by the first surface (corresponding to the lock function) of the input device while a plurality of items 710 to 740 are being displayed on the display 110, and then the input device being rotated while maintaining the touch by the first surface as illustrated in FIG. 7B, the controller 130 may perform the lock function regarding the third item 730. In another example, a user interaction is sensed of the input device 200 being rotated while still maintaining the touch by the first surface of the input device

When a user interaction is sensed of the second item 720 being touched by the second surface (corresponding to the delete function) of the input device while the plurality of items 710 to 740 are being displayed on the display 110 and the input device 200 being rotated while maintaining the touch by the first surface, the controller 130 may delete the second item 720.

When a user interaction is sensed of the input device 200 being turned around such that the surface touching the display is changed from the first surface to the second surface, the controller 130 may perform the function corresponding to the interaction of the input device 200 being turned around.

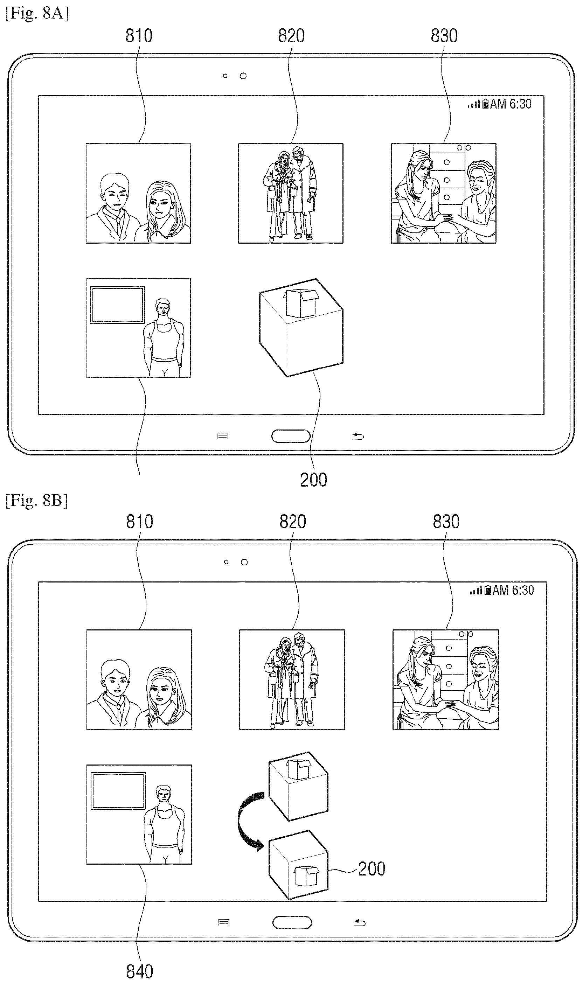

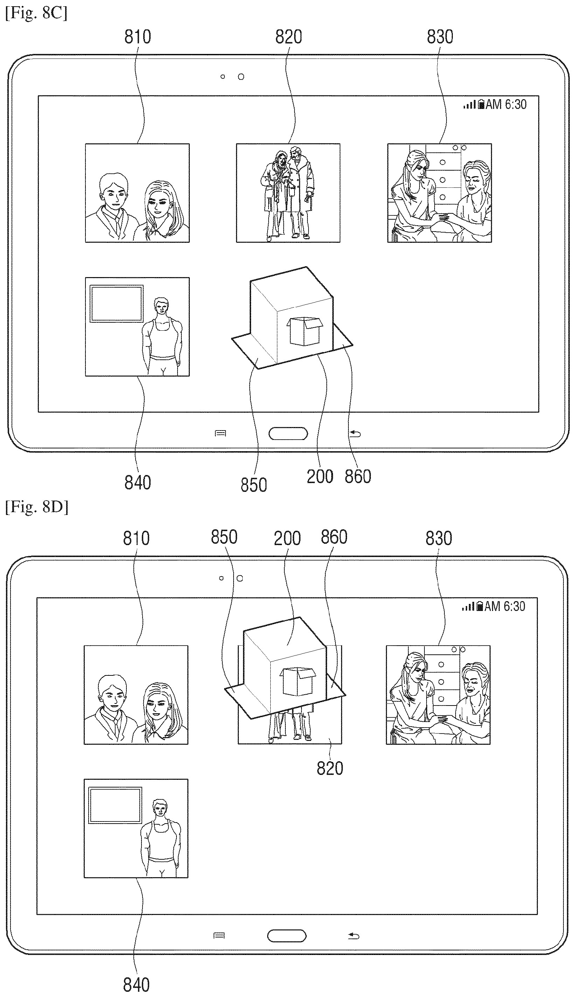

Referring to FIG. 8A, when a user interaction is sensed of the input device 200 being turned around such that the surface touching the display is changed from the first surface (corresponding to the data storing function) to the second surface as illustrated in FIG. 8B with the plurality of items 810 to 840 that correspond to a plurality of photo items being displayed on the display 110, the controller 130 may activate the data storage function that corresponds to the interaction of the input device 200 being turned around.

Herein, the controller may, as illustrated in FIG. 8C, control the display 110 to display a GUI 850, 860 as if a box is being opened on the area surrounding the touched area.

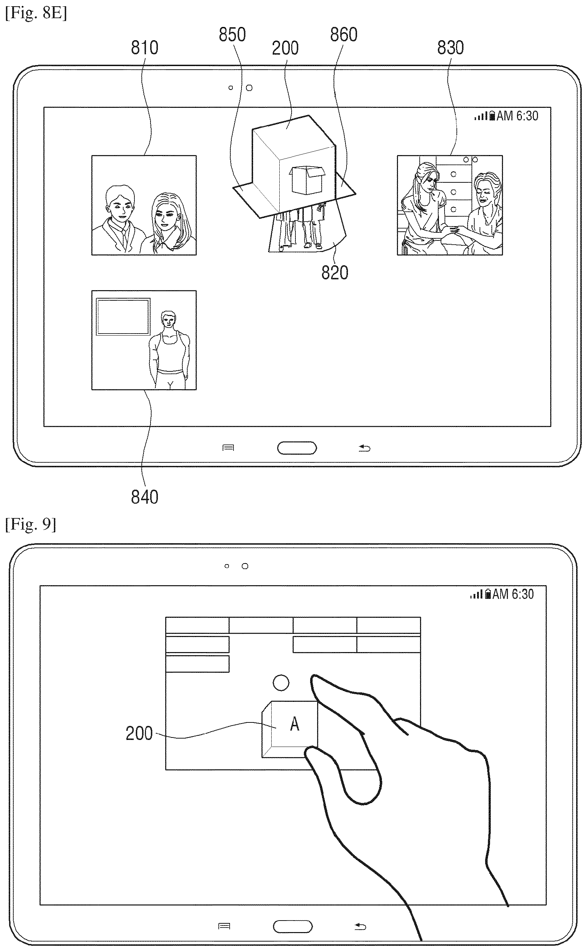

Furthermore, when a tap interaction of the second item 820 among the plurality of items being touched by the second surface is sensed, the controller 130 may store the photo content corresponding to the second item 820 where the tap interaction was sensed in the storage 160. Herein, when the photo content corresponding to the second item 820 is stored in the storage 160, the controller 130 may, as illustrated in FIG. 8E, control the display 110 to display a GUI as if the second item 820 is being absorbed into the box. Then, when a tap interaction of the third item 830 being tapped by the second surface of the input device 200 is sensed, the controller 130 may control the display 110 to display a GUI as if the photo content corresponding to the third item 830 where the tap interaction was sensed is being stored in the storage 160, and the third item 830 is being absorbed into the box. Furthermore, when the display 110 is touched by a surface other than the second surface of the input device 200, the controller 130 may stop the data storing function.

The controller 130 may perform various functions using the input device 200 while a certain application is being executed. For example, the controller 130 may perform a controller function for performing a game application as illustrated in FIG. 9 using the input device 200 while the game application is being executed. More specifically, while a game application of breaking walls with a ball is being executed, when a ball hits the area touched by the input device 200, the controller 130 may perform a function of rebounding the hit ball.

By another example, while a drawing application is being executed, the controller 130 may perform an eraser function of erasing a picture drawn using the input device 200. More specifically, by touching the display with the first surface of the input device 200 and then dragging the touch, the controller 130 may perform the erasing function.

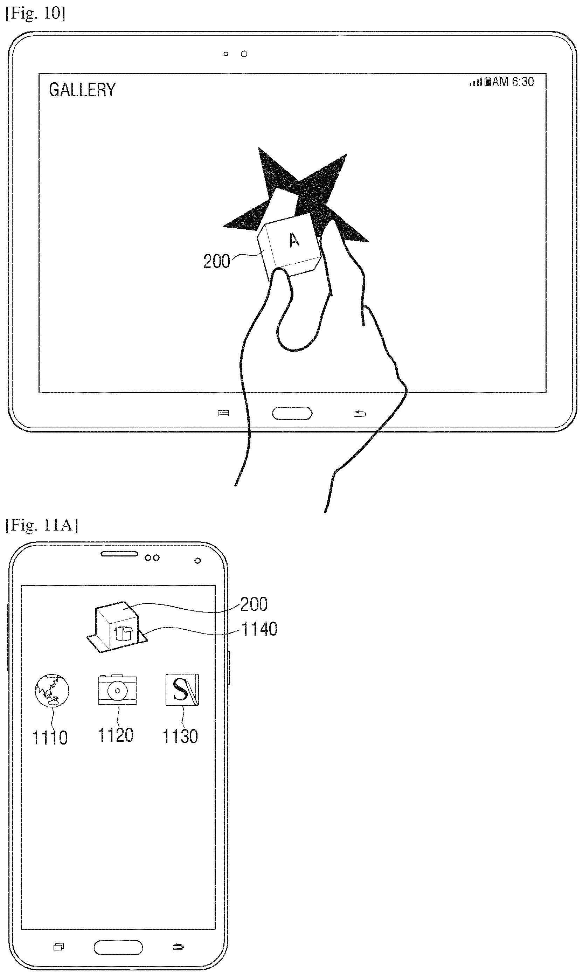

The controller 130 may control the communicator 140 to transmit various items to another user terminal device using the input device 200. More specifically, when a user interaction is sensed of an area of the display 110 being touched by a surface corresponding to the data storing function of the input device 200 while a plurality of items 1110 to 1130 are being displayed, the controller 130 may, as illustrated in FIG. 11A, control the display 110 to display a GUI 1140 as if a box is being opened.

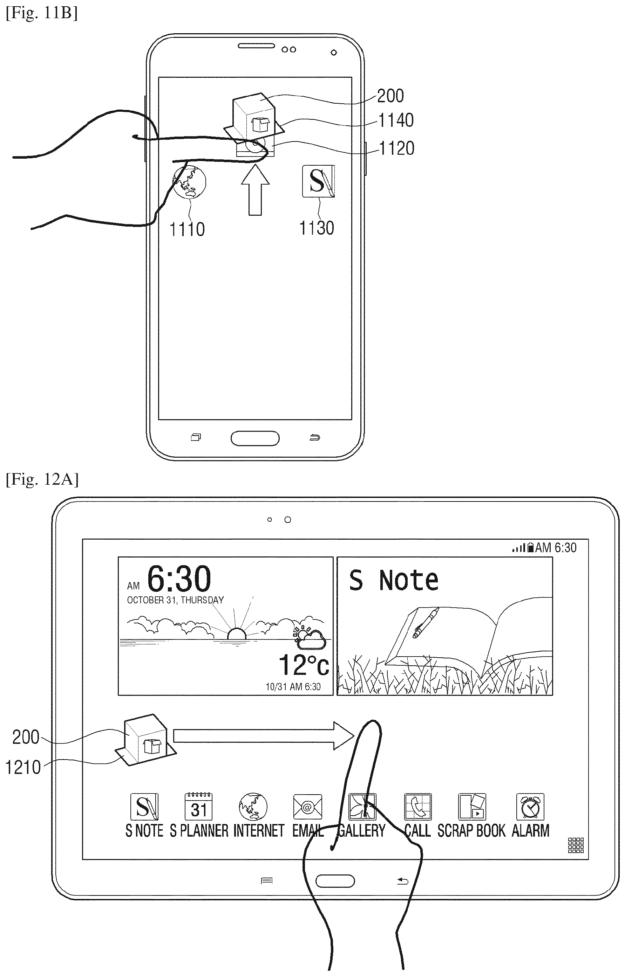

Furthermore, when a user interaction of dragging the second item 1120 to a touched area is sensed while the GUI 1140 is being displayed as illustrated in FIG. 11B, the controller 130 may store information on the second item 1120.

Furthermore, when a user interaction is sensed of the display of a second user terminal device being touched by a surface corresponding to the data storing function of the input device 200, wherein the second user terminal device is interlocked with the first user terminal device, the second user terminal device may, as illustrated in FIG. 12A, control the display 110 to display a GUI 1210 as if a box is being opened.

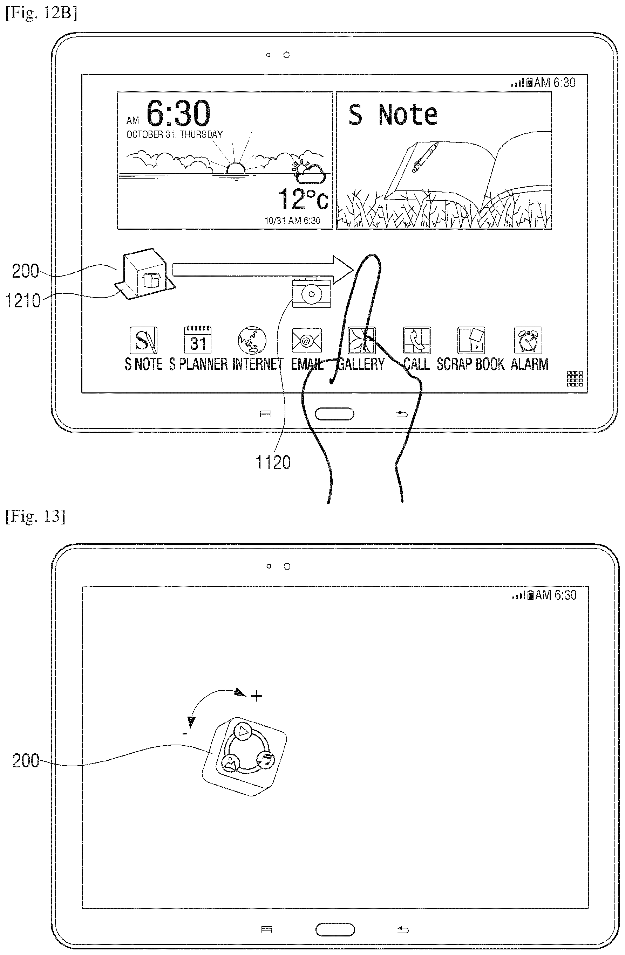

Furthermore, while the GUI 1210 is being displayed, when a flip interaction of one area near the GUI 1210 being touched and then flipped towards outside is sensed as illustrated in FIG. 12B, the second user terminal device may receive information on the second item 1120 from the first user terminal device, and as illustrated in FIG. 12B, control the display 110 such that the second item 1120 may be taken out in the sensed flip direction. Herein, the information on the second item 1110 may be received after the flip interaction is sensed in the second user terminal device, but without limitation, and thus, the information on the second item 1110 may be received while the surface corresponding to the data storing function of the input device 200 is touching the second user terminal device.

Referring to FIG. 13, when a user interaction is sensed of the input device 200 being rotated with the touch by the first surface (corresponding to the volume adjusting function) of the input device 200 on the first point of the display being maintained while the display 110 shows a waiting screen, the controller 130 may adjust the volume of the user terminal device 100 according to the interaction of the input device 200 being rotated. For example, when a user interaction is sensed of the input device 200 being rotated in a counterclockwise direction with the touch by the surface corresponding to the volume adjusting function of the input device 200 on the first point of the display 110 being maintained while the display 110 shows a waiting screen, the controller 130 may reduce the volume of the user terminal device 100 according to the extent of rotation of the rotation interaction.

It is possible to provide a network between user terminal devices that have been touched by a same surface of the input device 200.

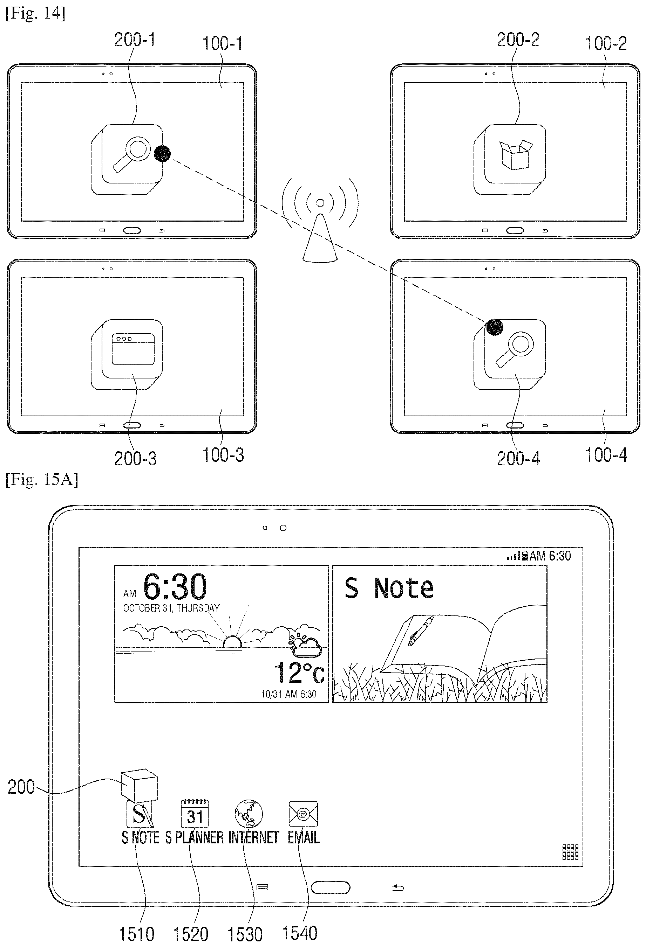

More specifically, as illustrated in FIG. 14, when each of the first to fourth user terminal devices are touched by each of a plurality of input devices 200-1 to 200-4, each of the first to fourth user terminal devices 100-1 to 100-4 may determine the touch pattern of the touched surface of each input device. For example, the first user terminal device 100-1 may determine that the touch on the first user terminal device 100-1 was made by the first surface of the first input device 200-1, that the touch on the second user terminal device 100-2 was made by the second surface of the second input device 200-2, that the touch on the third user terminal device 100-3 was made by the third surface of the third input device 200-3, and that the touch on the fourth user terminal device 100-4 was made by the fourth surface of the fourth input device 200-4. Furthermore, each of the plurality of user terminal devices 100-1 to 100-4 may share information on each of their touched patterns to create a network between the user terminal devices of which the same touch pattern has been touched. That is, a network may be created between the first user terminal device 100-1 and the fourth user terminal device 100-4 of which the same first surface has been touched among the plurality of user terminal devices 100-1 to 100-4.

According to an embodiment of the present disclosure, the controller 130 may control the display 110 to display a plurality of application items on an area surrounding the area touched by the input device 170 using the input device 170.

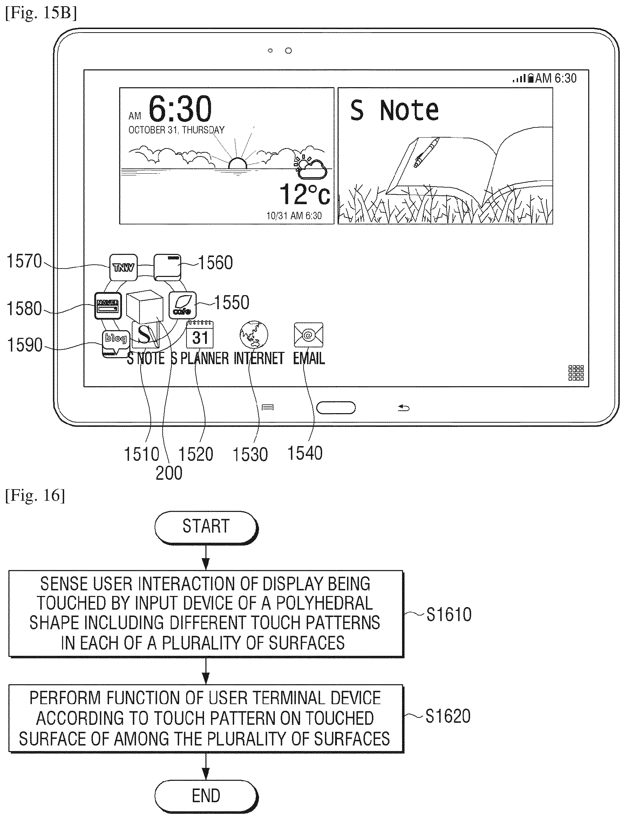

More specifically, with the plurality of items 1510 to 1540 displayed as illustrated in FIG. 15A, when an interaction is sensed of the first item 1510 being touched by the first surface (corresponding to the magnet function) of the input device 170, the controller 130 may, as illustrated in FIG. 15B, control the display 110 to display application items 1550 to 1590 related to the first item 1510 on an area surrounding the first item 1510.

Hereinafter, a control method of a user terminal device 100 will be explained with reference to FIG. 16.

First of all, the user terminal device 100 senses a user interaction of a touch being made by a polyhedral shaped input device that includes different touch patterns on each of a plurality of surfaces at operation S1610. Herein, examples of user interactions include various interactions such as a tap interaction, drag interaction, rotating interaction, flip interaction, turn around interaction.

Furthermore, the user terminal device 100 performs a function of the user terminal device 100 according to the touch pattern on the touched surface among the plurality of surfaces at operation S1620. More specifically, the user terminal device 100 may sense the touch pattern on the touched surface of the input device, determine the touched surface based on the sensed touch pattern, and perform the function corresponding to the touched surface determined.

By doing this, the user terminal device 100 may not only perform various manipulations through an input device having a polyhedral shape but also provide a new type of interaction where various fun elements may be added.

Meanwhile, a control method according to the aforementioned various embodiments of the present disclosure may be configured as a program and may be provided through a display device. Furthermore, a non-transitory computer readable medium storing such a program may be provided. A non-transitory computer readable medium refers to a computer readable medium that may store data semi-permanently and not for just a short period of time such as a register, cache, and memory. More particularly, the aforementioned various applications or programs may be stored in and provided through a non-transitory computer readable medium such as a compact disc (CD), digital versatile disc (DVD), hard disk, blue ray disk, universal serial bus (USB), memory card, and read only memory (ROM) and the like.

While the present disclosure has been shown and described with reference to various embodiments thereof, it will be understood by those skilled in the art that various changes in form and details may be made therein without departing from the scope of the present disclosure as defined by the appended claims.

## Claims

1. A user terminal device (100) comprising:
a display (110);
a sensor (120) configured to sense a user interaction on the display (110); and
a controller (130) configured to, in response to a user interaction sensed by the sensor (120)
of a touch on the display (110) being made by an input device (200) of a polyhedral shape that includes different touch patterns on each of a plurality of surfaces, control a function of the user terminal device (100) according to a touch pattern being in contact with the display (110),
**characterized in that**
in response to a drag interaction sensed by the sensor (120) of a touch being made by a first surface among the plurality of surfaces of the input device (200) on a first point of the display (110) and then dragged to a second point, control the display (110) to display a new window (510) of a type according to the touch pattern of the touched first surface, the new window having a shape of a square, whereby the first point and the second point are diagonally opposite corners of the square.

2. The user terminal device according to claim 1,
wherein each of the plurality of surfaces of the input device (200) has a corresponding function, and
wherein the controller (130) is further configured to:
sense the touch pattern on the touched surface of the input device (200), determine the touched surface based on the sensed touch pattern, and perform the function corresponding to the determined touched surface.

3. The user terminal device (100) according to claim 1, wherein the controller (130) is further configured to, in response to a user interaction sensed by the sensor (120) of the touch being made by the input device (200), control the display to display a user interface (UI) that includes a plurality of menus for controlling the user terminal device on an area surrounding an area touched by the input device according to the touch pattern on the touched surface among the plurality of surfaces, and then the input device being dragged to one of the plurality of menus (610, 620, 630) while the user interface including the plurality of menus is being displayed (610, 620, 630), perform a function corresponding to the menu (620) to which the drag has been made.

4. A control method of a user terminal device (100), the method comprising:
sensing a user interaction of a touch on a display (110) of the user terminal device (100) being made by an input device (200) of a polyhedral shape that includes different touch patterns on each of a plurality of surfaces; and
performing a function of the user terminal device (100) according to a touch pattern being in contact with the display (110),
**characterized in that**
in response to a drag interaction sensed by the sensor (120) of a touch being made by a first surface among the plurality of surfaces of the input device (200) on a first point of the display (110) and then dragged to a second point, control the display (110) to display a new window (510) of a type according to the touch pattern of the touched first surface, the new window having a shape of a square, whereby the first point and the second point are diagonally opposite corners of the square.

5. The method according to claim 4,
wherein each of the plurality of surfaces of the input device has a corresponding function, and
wherein the performing of the function of the user terminal device (100) comprises:
sensing the touch pattern on the touched surface of the input device (200), determining the touched surface based on the sensed touch pattern, and performing the function corresponding to the determined touched surface.

6. A non-transitory computer readable recording medium storing instructions executable by a processor of a user terminal (100) to cause the processor to execute the control method of any of claims 4 to 5.

## Patentansprüche

1. Benutzerendgerätevorrichtung (100), umfassend:
eine Anzeige (110);
einen Sensor (120), der konfiguriert ist, um eine Benutzerinteraktion auf der Anzeige (110) zu erfassen; und
eine Steuerung (130), die konfiguriert ist, um als Reaktion darauf, dass eine vom Sensor (120) erfasste Benutzerinteraktion einer Berührung auf der Anzeige (110) durch eine Eingabevorrichtung (200) von polyedrischer Form, die unterschiedliche Berührungsmuster auf jeder einer Vielzahl von Oberflächen umfasst, durchgeführt wird, eine Funktion der Benutzerendgerätevorrichtung (100) gemäß einem Berührungsmuster zu steuern, das mit der Anzeige (110) in Kontakt steht,
**dadurch gekennzeichnet, dass**
als Reaktion darauf, dass eine durch den Sensor (120) erfasste Ziehinteraktion einer Berührung durch eine erste Oberfläche unter der Vielzahl von Oberflächen der Eingabevorrichtung (200) auf einem ersten Punkt der Anzeige (110) durchgeführt wird und dann zu einem zweiten Punkt gezogen wird, Steuern der Anzeige, um ein neues Fenster (510) eines Typs gemäß dem Berührungsmuster der berührten ersten Oberfläche anzuzeigen, wobei das neue Fenster eine Form eines Quadrats aufweist, wodurch der erste Punkt und der zweite Punkt diagonal gegenüberliegende Ecken des Quadrats sind.

2. Benutzerendgerätevorrichtung nach Anspruch 1,
wobei jede der Vielzahl von Oberflächen der Eingabevorrichtung (200) eine entsprechende Funktion aufweist, und
wobei die Steuerung (130) ferner konfiguriert ist zum:
Erfassen des Berührungsmusters auf der berührten Oberfläche der Eingabevorrichtung (200), Bestimmen der berührten Oberfläche basierend auf dem erfassten Berührungsmuster und Durchführen der Funktion, die der der bestimmten berührten Oberfläche entspricht.

3. Benutzerendgerätevorrichtung (100) nach Anspruch 1, wobei die Steuerung (130) ferner konfiguriert ist, um als Reaktion darauf, dass eine vom Sensor (120) erfasste Benutzerinteraktion der Berührung durch die Eingabevorrichtung (200) durchgeführt wird, die Anzeige zu steuern, um eine Benutzerschnittstelle (UI), die eine Vielzahl von Menüs zum Steuern der Benutzerendgerätevorrichtung in einem Bereich, der einen von der Eingabevorrichtung berührten Bereich umgibt, aufweist, gemäß dem Berührungsmuster auf der berührten Oberfläche unter der Vielzahl von Oberflächen anzuzeigen, wobei dann die Eingabevorrichtung zu einem der Vielzahl von Menüs (610, 620, 630) gezogen wird, während die Benutzerschnittstelle, die die Vielzahl von Menüs aufweist, angezeigt wird (610, 620, 630), um eine Funktion durchzuführen, die dem Menü (620) entspricht, zu dem das Ziehen durchgeführt wurde.

4. Verfahren zur Steuerung einer Benutzerendgerätevorrichtung (100), wobei das Verfahren umfasst:
Erfassen einer Benutzerinteraktion einer Berührung auf einer Anzeige (110) der Benutzerendgerätevorrichtung (100), die durch eine Eingabevorrichtung (200) einer polyedrischen Form durchgeführt wird, die unterschiedliche Berührungsmuster auf jeder der Vielzahl der Oberflächen umfasst; und
Durchführen einer Funktion der Benutzerendgerätevorrichtung (100) gemäß einem Berührungsmuster, das mit der Anzeige (110) in Kontakt steht,
**dadurch gekennzeichnet, dass**
als Reaktion darauf, dass eine durch den Sensor (120) erfasste Ziehinteraktion einer Berührung durch eine erste Oberfläche unter der Vielzahl von Oberflächen der Eingabevorrichtung (200) auf einem ersten Punkt der Anzeige (110) durchgeführt wird und dann zu einem zweiten Punkt gezogen wird, Steuern der Anzeige, um ein neues Fenster (510) eines Typs gemäß dem Berührungsmuster der berührten ersten Oberfläche anzuzeigen, wobei das neue Fenster eine Form eines Quadrats aufweist, wodurch der erste Punkt und der zweite Punkt diagonal gegenüberliegende Ecken des Quadrats sind.

5. Verfahren nach Anspruch 4,
wobei jede der Vielzahl von Oberflächen der Eingabevorrichtung eine entsprechende Funktion aufweist, und
wobei das Durchführen der Funktion der Benutzerendgerätevorrichtung (100) umfasst:
Erfassen des Berührungsmusters auf der berührten Oberfläche der Eingabevorrichtung (200), Bestimmen der berührten Oberfläche basierend auf dem erfassten Berührungsmuster und Durchführen der Funktion, die der der bestimmten berührten Oberfläche entspricht.

6. Nicht-transitorisches, computerlesbares Aufzeichnungsmedium, auf dem Anweisungen gespeichert sind, die von einem Prozessor eines Benutzerendgeräs (100) ausgeführt werden können, um den Prozessor dazu zu veranlassen, das Steuerungsverfahren nach einem der Ansprüche 4 bis 5 auszuführen.

## Revendications

1. Dispositif de terminal d'utilisateur (100), comprenant :
un affichage (110) ;
un capteur (120) configuré pour détecter une interaction d'utilisateur sur l'affichage (110) ; et
une commande (130) configurée pour, en réponse à une interaction d'utilisateur détectée par le capteur (120) d'un toucher sur l'affichage (110) étant effectué par un dispositif d'entrée (200) de forme polyédrique comportant différents motifs tactiles sur chacune d'une pluralité de surfaces, commander une fonction du dispositif de terminal d'utilisateur (100) en fonction du motif tactile étant en contact avec l'affichage (110),
**caractérisé en ce que**
en réponse à une interaction de glissement détectée par le capteur (120), consistant en un toucher étant établi par une première surface parmi la pluralité de surfaces du dispositif d'entrée (200) sur un premier point de l'affichage (110), puis fait glisser vers un deuxième point, commander l'affichage (110) pour qu'il affiche une nouvelle fenêtre (510) d'un type en fonction d motif tactile de la première surface touchée, la nouvelle fenêtre ayant la forme d'un carré, de sorte que le premier point et le deuxième point soient des coins diagonalement opposés du carré.

2. Dispositif de terminal d'utilisateur selon la revendication 1,
dans lequel chacune de la pluralité de surfaces du dispositif d'entrée (200) a une fonction correspondante, et
dans lequel la commande (130) est en outre configurée pour :
détecter le motif tactile sur la surface touchée du dispositif d'entrée (200), déterminer la surface touchée en se basant sur le motif tactile détecté, et exécuter la fonction correspondant à la surface touchée déterminée.

3. Dispositif de terminal d'utilisateur (100) selon la revendication 1, dans lequel la commande (130) est en outre configurée pour, en réponse à une interaction d'utilisateur détectée par le capteur (120) du toucher étant établi par le dispositif d'entrée (200), commander l'affichage afin d'afficher une interface utilisateur (UI) comprenant une pluralité de menus permettant de commander le dispositif de terminal d'utilisateur dans une zone entourant la zone touchée par le dispositif d'entrée, en fonction du motif tactile sur la surface touchée parmi la pluralité de surfaces, puis de faire glisser le dispositif d'entrée vers un de la pluralité de menus (610, 620, 630) pendant que l'interface d'utilisateur comprenant la pluralité de menus est affichée (610, 620, 630), exécuter une fonction correspondant au menu (620) vers lequel le glissement a été effectué.

4. Procédé d'affichage d'un dispositif de terminal d'utilisateur (100), le procédé comprenant :
détecter une interaction d'utilisateur consistant en un toucher sur un affichage (110) du dispositif de terminal d'utilisateur (100) étant effectuée par un dispositif d'entrée (200) de forme polyédrique comprenant des motifs tactiles différents sur chacune de la pluralité de surfaces ; et
exécuter une fonction du dispositif de terminal d'utilisateur (100) en fonction d'un motif tactile étant en contact avec l'affichage (110),
**caractérisé en ce que**
en réponse à une interaction de glissement détectée par le capteur (120), consistant en un toucher étant établi par une première surface parmi la pluralité de surfaces du dispositif d'entrée (200) sur un premier point de l'affichage (110), puis fait glisser vers un deuxième point, commander l'affichage (110) pour qu'il affiche une nouvelle fenêtre (510) d'un type en fonction d motif tactile de la première surface touchée, la nouvelle fenêtre ayant la forme d'un carré, de sorte que le premier point et le deuxième point soient des coins diagonalement opposés du carré.

5. Procédé selon la revendication 4,
dans lequel chacune de la pluralité de surfaces du dispositif d'entrée a une fonction correspondante, et
dans lequel l'exécution de la fonction du dispositif de terminal d'utilisateur (100) comprend :
détecter le motif tactile sur la surface touchée du dispositif d'entrée (200), déterminer la surface touchée en se basant sur le motif tactile détecté, et exécuter la fonction correspondant à la surface touchée ainsi déterminée.

6. Support d'enregistrement non transitoire lisible par ordinateur, stockant des instructions exécutables par un processeur d'un terminal d'utilisateur (100) afin d'amener le processeur à exécuter le procédé de commande selon l'une quelconque des revendications 4 à 5.
